Europäisches Patentamt

European Patent Office

Office européen des brevets

(19)

(11) **EP 1 304 932 B1**

(12) **FASCICULE DE BREVET EUROPEEN**

(45) Date de publication et mention
de la délivrance du brevet:
**17.08.2005 Bulletin 2005/33**

(21) Numéro de dépôt: **01949577.9**

(22) Date de dépôt: **28.06.2001**

(51) Int Cl.⁷: **A24C 5/34**, A24C 5/343

(86) Numéro de dépôt international:
**PCT/FR2001/002077**

(87) Numéro de publication internationale:
**WO 2002/005668 (24.01.2002 Gazette 2002/04)**

(54) **PROCEDE DE CARACTERISATION DE LA COMPACITE D'OBJETS TELS QUE DES CIGARETTES OU DES FILTRES**

VERFAHREN ZUR CHARAKTERISIERUNG DER KOMPAKHEIT VON GEGENSTÄNDEN SOWIE ZIGARETTEN ODER FILTERN

METHOD FOR CHARACTERISING COMPACTNESS OF OBJECTS SUCH AS CIGARETTES OR FILTERS

(84) Etats contractants désignés:
**AT BE CH CY DE DK ES FI FR GB GR IE IT LI LU MC NL PT SE TR**

(30) Priorité: **13.07.2000 FR 0009366**

(43) Date de publication de la demande:
**02.05.2003 Bulletin 2003/18**

(73) Titulaire: **SOCIETE NATIONALE D'EXPLOITATION INDUSTRIELLE DES TABACS ET ALLUMETTES 75639 Paris Cedex 13 (FR)**

(72) Inventeur: **COLARD, Stéphane F-45000 Orléans (FR)**

(74) Mandataire: **de Saint-Palais, Arnaud Marie Cabinet Moutard, 35 Rue de la Paroisse, BP 513 78005 Versailles Cedex (FR)**

(56) Documents cités:
**EP-A- 0 360 693**     **EP-A- 0 433 800**
**WO-A-85/04714**     **GB-A- 2 098 050**

## Description

La présente invention concerne un procédé de caractérisation de la compacité d'objets tels que des cigarettes ou des filtres ainsi que du pouvoir de remplissage d'un volume par des produits tels que du tabac.

D'une manière générale, on sait que les méthodes actuelles de caractérisation de la compacité des cigarettes, des filtres et du pouvoir de remplissage reposent sur un même principe physique : le produit à caractériser est placé entre deux mâchoires qui le soumettent à une force capable de provoquer un écrasement. L'amplitude de la déformation résultante est alors mesurée après un certain temps et est directement reliée aux propriétés caractéristiques communément appelée compacité et pouvoir de remplissage. Les méthodes actuelles assimilent donc ces propriétés caractéristiques à une amplitude d'écrasement.

La forme des mâchoires, la valeur de la force appliquée et le temps au bout duquel est mesurée l'amplitude d'écrasement, sont fortement variables d'un fournisseur d'appareil à un autre, mais le principe reste le même.

La caractérisation de la compacité ou du pouvoir de remplissage par une amplitude d'écrasement constitue un moyen simple mais est loin de fournir une description détaillée du comportement du produit lorsqu'il est soumis à une force. En effet, l'écrasement dépend des déformations plastique et élastique, et de la relaxation des forces à l'intérieur du produit. Or, l'amplitude d'écrasement après un temps donné ne fournit aucune information sur ces trois phénomènes physiques. Les méthodes actuelles sont ainsi peu discriminantes puisque peu descriptives des propriétés mécaniques du produit.

L'invention a donc plus particulièrement pour but de supprimer ces inconvénients.

Elle propose à cet effet un procédé de caractérisation reposant sur une modélisation physique des phénomènes et l'ajustement de ce modèle à des données expérimentales de manière à caractériser le produit en ce qui concerne la compacité ou le pouvoir de remplissage.

D'une façon plus précise, ce procédé comprend les étapes suivantes :

■ La modélisation physique des phénomènes rentrant dans le processus d'écrasement, cette modélisation prenant en compte la déformation élastique, la déformation plastique et la relaxation.
■ L'ajustement du modèle obtenu lors de la phase de modélisation à des données expérimentales, et
■ La caractérisation du produit à partir du modèle ajusté grâce à des paramètres autres que la valeur d'amplitude d'écrasement, relatifs à la dissipation d'énergie lors de la déformation, la relaxation des forces ou même l'accumulation de l'énergie lors de la déformation.

Avantageusement, la susdite phase d'ajustement pourra comprendre :

■ L'application au produit d'une force connue d'écrasement, à l'aide d'un dispositif comprenant des mâchoires, un moyen d'appliquer une force sur ces mâchoires et un système d'enregistrement du déplacement relatif desdites mâchoires,
■ Une phase d'acquisition des données dans laquelle on enregistre le déplacement au cours du temps,
■ Une phase de caractérisation physique par ajustement du modèle aux données expérimentales, à l'aide d'un outil de multirégression,
■ Une phase de description du produit à l'aide d'au moins trois paramètres caractéristiques de la déformation plastique et élastique et du phénomène de relaxation.

On constate que ce procédé qui fournit des informations relatives à la déformation élastique, à la déformation plastique et à la relaxation lors du processus d'écrasement est plus discriminante que les méthodes utilisées jusqu'ici.

De plus, selon ce procédé, l'information est extraite dès les premières secondes d'écrasement et est donc obtenue beaucoup plus rapidement qu'elle ne l'est avec les procédés actuels basés sur des mesures d'amplitude d'écrasement.

Le procédé selon l'invention sera mieux compris à la lecture de la description ci-après donnée à titre d'exemple non limitatif, avec référence aux dessins annexés dans lesquels :

La figure 1 est un schéma d'un circuit électrique constituant un modèle du comportement d'une cigarette, ou d'un échantillon de tabac, soumise à une force d' écrasement ;

La figure 2 est un diagramme montrant les courbes de modélisation de déplacements en fonction du temps de la mâchoire d'écrasement de la cigarette, ou de l'échantillon de tabac, sur laquelle on applique la force d'écrasement ;

La figure 3 montre une courbe d'écrasement en fonction du temps illustrant l'ajustement du modèle aux mesures d'écrasement enregistrées expérimentalement.

Comme précédemment mentionné, le procédé selon l'invention comprend la modélisation du comportement de l'objet à étudier soumis à une force d'écrasement

A cet effet, la demanderesse a recherché les analogies qui peuvent exister entre les phénomènes physiques mis en oeuvre dans le processus d'écrasement et les phénomènes électriques dont les lois sont mieux connues et qui sont donc plus facilement exploitables.

A ce titre, elle s'est basée sur les constatations suivantes :

- la déformation plastique, qui induit une perte d'énergie fournie, peut être représentée par une résistance électrique $R_1$ qui dissipe de l'énergie lorsqu'un courant la traverse,
- La déformation élastique, qui représente un stockage d'énergie peut être représentée par une capacité C qui se charge ou se décharge lorsqu'elle est soumise à des variations de tension,
- La relaxation qui constitue une perte d'énergie accumulée peut être représentée par une résistance $R_2$ branchée en parallèle de la capacité induisant un courant de fuite.

Le tableau I ci-après fait apparaître les analogies entre les phénomènes mécaniques et les phénomènes électriques précédemment évoqués.

## Tableau I

| Phénomènes mécaniques | Phénomènes électriques |
|---|---|
| Force F(t) | Tension u(t) |
| Vitesse v(t) | Courant i(t) |
| Energie fournie : $\int_o^t F(t).v(t).dt$ | Energie fournie : $\int_o^t u(t).i(t).dt$ |
| Dissipation d'énergie | Résistance R : $\int_o^t R.I^2(t).dt$ |
| Accumulation d'énergie | Capacité $\underline{1} \times C \times u^2(t)$ <br> 2 |

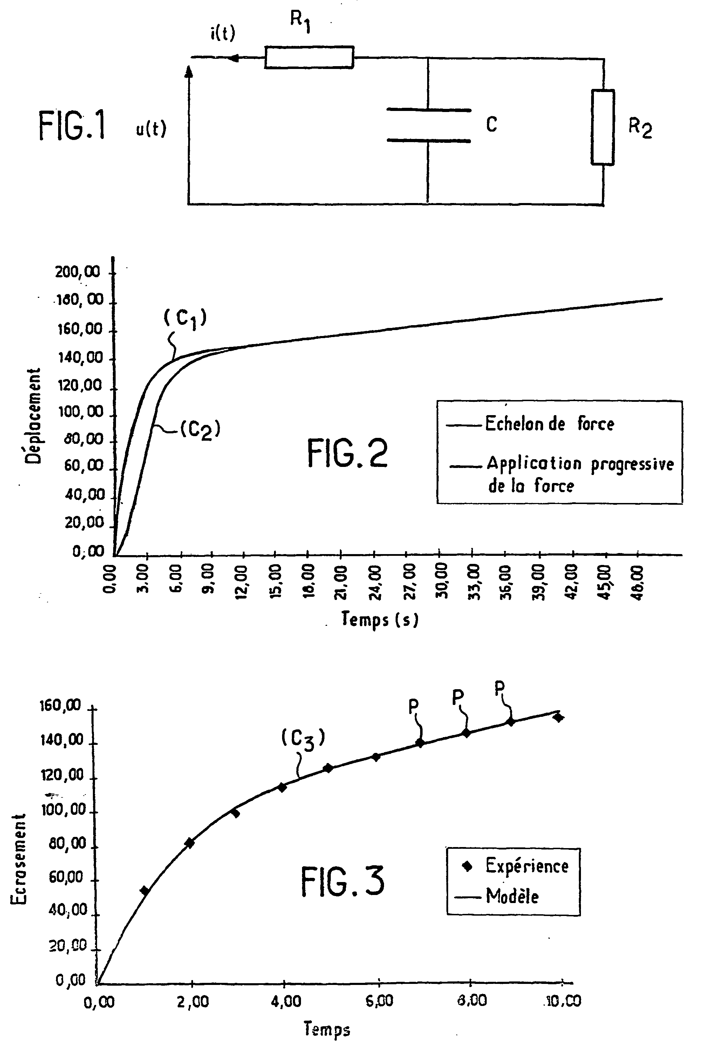

Le modèle électrique équivalent à un objet tel qu'une cigarette, un filtre ou un échantillon de tabac, soumise à une force d'écrasement est représenté sur la figure 1.

Ce modèle se présente sous la forme d'un circuit électrique monté entre deux bornes sur lesquelles est appliquée une tension u(t) et comprenant en série, d'une part, une résistance $R_1$ et, d'autre part, une capacité C sur laquelle est montée en parallèle une résistance $R_2$.

Le calcul de la réponse d'une cigarette ou du tabac à une force F(t) revient à calculer la réponse du circuit électrique à une tension u(t). Dans le cas général, ce calcul peut être effectué à l'aide de la transformation de Laplace.

En supposant que la force d'amplitude F est appliquée instantanément, c'est à dire que la tension u(t) soit un échelon de tension, le courant i(t) circulant dans la résistance $R_1$ est de la forme :

$$i(t) = \frac{U}{R_1}\left[1 - \frac{R_2}{R_1 + R_2} \times \left(1 - e^{-\frac{R_1 + R_2}{R_1 \times R_2 \times C} \times t}\right)\right]$$

soit, par analogie, pour la vitesse de déplacement :

$$v(t) = \frac{F}{p_1}\left[1 - \frac{p_2}{p_1 + p_2} \times \left(1 - e^{-\frac{p_1 + p_2}{p_1 \times p_2 \times p_3} \times t}\right)\right].$$

et pour déplacement :

$$d(t) = \int_0^t v(t).dt \equiv \int_0^t i(t).dt$$

$$d(t) = \frac{F.p_2^2.p_3}{(p_1 + p_2)^2} \times \left(1 - e^{-\frac{p_1 + p_2}{p_1 \cdot p_2 \cdot p_3} \times t}\right) + \frac{F}{p_1 + p_2} \times t$$

avec

$p_1$ :    paramètre caractéristique de la dissipation d'énergie lors de la déformation
$p_2$ :    paramètre caractéristique de la relaxation des forces
$p_3$ :    paramètre caractéristique de l'accumulation d'énergie lors de la déformation

Le modèle électrique proposé ci-dessus permet de calculer le déplacement quelle que soit la force appliquée. En voici un autre exemple : si nous supposons que la force F(t) n'est pas appliquée instantanément, mais qu'elle augmente linéairement avant d'atteindre sa valeur maximale F au bout d'un temps $t_o$, on obtient une relation plus complexe :

$$d(t) = \frac{a \times p_1 \times p_2^3 \times p_3^2}{(p_1 + p_2)^3} \times \left(e^{-\frac{p_1 + p_2}{p_1 \cdot p_2 \cdot p_3} \times t} - 1\right) + \frac{a}{2.(p_1 + p_2)} \times t^2 + \frac{a \times p_2^2 \times p_3}{(p_1 + p_2)^2} \times t -$$

$$\left[\frac{a \times p_1 \times p_2^3 \times p_3^2}{(p_1 + p_2)^3} \times \left(e^{-\frac{p_1 + p_2}{p_1 \cdot p_2 \cdot p_3} \times (t - t_0)} - 1\right) + \frac{a}{2.(p_1 + p_2)} \times (t - t_0)^2 + \frac{a \times p_2^2 \times p_3}{(p_1 + p_2)^2} \times (t - t_0)\right] \times H(t - t_0)$$

Avec

a :       Vitesse d'augmentation de la tension entre t=0 et t=$t_o$ (a=F/$t_o$)
H(t) :    Fonction d'Heaviside ou d'échelon

La modélisation du déplacement est tracée pour les deux cas de figure précédents, pour F=355, $p_1$=4, $p_2$=400, $p_3$=0.4 et $t_o$=3s, sur la figure 2 dans laquelle la courbe $C_1$ correspond à l'application d'un échelon de force tandis que la courbe $C_2$ est la réponse à une application progressive de la force.
On remarque sur cette figure 2 qu'après une déformation majeure, le phénomène de relaxation induit un déplacement linéaire.
Le modèle étant établi, il s'agit maintenant de l'exploiter pour caractériser le produit.
Le dispositif expérimental employé reste le même que ceux déjà utilisés par les méthodes actuelles de mesure de compacité ou de pouvoir de remplissage. Par contre, avec la méthode proposée, il est indispensable de connaître ou d'enregistrer la force appliquée et le déplacement tout au long du processus d'écrasement. Connaissant la force appliquée au cours du temps, on simule alors à l'aide du modèle, le déplacement théorique, que l'on ajuste au déplacement mesuré. Il faut toutefois préciser qu'une loi d'application de force simple, comme un échelon de force par exemple, simplifie considérablement la modélisation du déplacement et donc l'étape de l'ajustement.

L'exploitation des données se fait donc en ajustant le modèle théorique aux données expérimentales. L'ajustement du modèle théorique aux données expérimentales est réalisé à l'aide d'un outil informatique de multirégression non linéaire. Cet outil peut être basé sur différents algorithmes de minimisation tel que celui de Newton Raphson, de la plus grande pente ou celui de Levenberg-Marquardt. Dans ce dernier cas, il est possible d'exprimer l'incertitude sur les trois paramètres $p_1$, $p_2$ et $p_3$ du modèle. Un exemple est donné sur la figure 3, dans le cas d'une application d'un échelon de force et pour lequel les mesures enregistrées sont indiquées sur le tableau II ci-après.

Tableau II

| Temps | Ecrasement |
|-------|------------|
| 0,00 | 0,00 |
| 1,00 | 55,20 |
| 2,00 | 82,20 |
| 3,00 | 98,70 |
| 4,00 | 113,90 |
| 5,00 | 125,70 |
| 6,00 | 131,60 |
| 7,00 | 139,80 |
| 8,00 | 145,70 |
| 9,00 | 151,60 |
| 10,00 | 154,40 |

Sur la figure 3, la courbe $C_3$ correspond au modèle tandis que les points P correspondent aux valeurs obtenues expérimentalement.

Les valeurs des paramètres du modèle permettant d'ajuster les données expérimentales sont, à 95%, les suivantes :

$$p_1 = 4.4 \pm 0.2$$

$$p_2 = 48 \pm 5$$

$$p_3 = 0.40 \pm 0.01$$

avec F=300.

Ces trois paramètres caractérisent le comportement du produit lorsqu'il est soumis à l'écrasement.

$p_1$ est un paramètre relatif à la déformation plastique. Plus il est grand et plus la déformation plastique est importante. $p_2$ est un paramètre relatif à la relaxation. Plus il est grand et plus ce phénomène est faible. Enfin, $p_3$ est un paramètre relatif à la déformation élastique. Plus il est grand et plus la déformation élastique est importante.

Ces trois paramètres, obtenus grâce à ce nouveau procédé de mesure, permettent de caractériser beaucoup plus complètement le produit que ne le fait une valeur d'amplitude d'écrasement après un temps donné. De plus, on peut remarquer que le nouveau procédé permet de calculer a posteriori le résultat que donneraient les méthodes actuelles. La réciproque est fausse. Ceci démontre bien le caractère plus descriptif du procédé selon l'invention.

On peut préciser que l'incertitude sur les paramètres peut être réduite en augmentant le nombre de mesures.

**Revendications**

1. Procédé de caractérisation de la compacité d'objets tels que des cigarettes ou des filtres ainsi que du pouvoir de remplissage d'un volume par un produit tel que du tabac,
   **caractérisé en ce qu'**il comprend les étapes suivantes :

   ■ La modélisation physique des phénomènes rentrant dans le processus d'écrasement de l'objet ou du produit, cette modélisation prenant en compte la déformation élastique, la déformation plastique et la relaxation.
   ■ L'ajustement du modèle obtenu lors de la phase de modélisation à des données expérimentales, et
   ■ La caractérisation de l'objet ou du produit à partir du modèle ajusté grâce à des paramètres autres que la valeur d'amplitude d'écrasement, relatifs à la dissipation d'énergie lors de la déformation, la relaxation des forces ou même l'accumulation de l'énergie lors de la déformation.

2. Procédé selon la revendication 2,
   **caractérisé en ce que** le modèle utilisé est celui d'un circuit électrique monté entre deux bornes sur lesquelles est appliquée une tension u(t) et comprenant en série, d'une part, une résistance $R_1$ et, d'autre part, une capacité sur laquelle est montée en parallèle une résistance $R_2$.

3. Procédé selon l'une des revendications précédentes,
   **caractérisé en ce que** les susdites phases d'ajustement et de caractérisation comprennent :

   ■ L'application au produit d'une force connue d'écrasement, à l'aide d'un dispositif comprenant des mâchoires, un moyen d'appliquer une force sur ces mâchoires et un système d'enregistrement du déplacement relatif desdites mâchoires,
   ■ Une phase d'acquisition des données dans laquelle on enregistre le déplacement au cours du temps,
   ■ Une phase de caractérisation physique par ajustement du modèle aux données expérimentales, à l'aide d'un outil de multirégression,
   ■ Une phase de description du produit à l'aide d'au moins trois paramètres caractéristiques de la déformation plastique et élastique et du phénomène de relaxation.

4. Procédé selon les revendications précédentes,
   **caractérisé en ce que**, dans le cas de l'application d'un échelon de force d'amplitude F, le susdit modèle est de la forme :

$$d(t) = \frac{F \cdot p_2^2 \cdot p_3}{(p_1 + p_2)^2} \times \left( 1 - e^{-\frac{p_1 + p_2}{p_1 \cdot p_2 \cdot p_3} \times t} \right) + \frac{F}{p_1 + p_2} \times t$$

   avec

   $p_1$ : paramètre caractéristique de la dissipation d'énergie lors de la déformation
   $p_2$ : paramètre caractéristique de la relaxation des forces
   $p_3$ : paramètre caractéristique de l'accumulation d'énergie lors de la déformation
   d(t) : déplacement en fonction du temps
   F : valeur maximale de la force appliquée F(t)

5. Procédé selon la revendication 3,
   **caractérisé en ce que** l'ajustement du susdit modèle aux données expérimentales est réalisé à l'aide d'un outil informatique de multirégression non linéaire basé sur un algorithme de multirégression tel que celui de Newton Raphson, de la plus grande pente ou celui de Levenberg-Marquardt permettant d'exprimer l'incertitude sur les trois paramètres $p_1$, $p_2$, $p_3$ du modèle.

**Patentansprüche**

1. Charakterisierungsverfahren der Kompaktheit von Gegenständen wie Zigaretten oder Filter sowie des Füllvermögens einer Menge von Produkten wie Tabak, **dadurch gekennzeichnet, dass** es die folgenden Phasen umfasst:

   - Die physikalische Modellierung von Erscheinungen, die in den Zerdrückungsvorgang des Gegenstandes oder des Produktes fallen, wobei diese Modellierung die elastische Verformung, die plastische Verformung und die Relaxation mit einbezieht.

   - die Anpassung des aus der Modellierungsphase anhand von experimentellen Daten erhaltenen Modells, und

   - Die Charakterisierung des Gegenstandes oder des Produktes aus dem angepassten Modell dank keiner anderen Parametern als der Wert der Zerdrückungs-Amplitude bezüglich der Energiedissipation bei der Verformung, der Kräfteentspannung oder selbst der Energiespeicherung bei der Verformung.

2. Verfahren nach Anspruch 2, **dadurch gekennzeichnet, dass** das benutzte Modell jenes einer elektrischen Schaltung ist, die zwischen zwei Klemmen montiert ist, an welche eine Spannung u(t) angelegt ist und, in Reihe geschaltet, einerseits einen Widerstand $R_1$ umfasst und, andererseits, eine Kapazität, auf welche parallel ein Widerstand $R_2$ montiert ist.

3. Verfahren nach einem der vorangehenden Ansprüche, **dadurch gekennzeichnet, dass** die besagten Anpassungs- und Charakterisierungsphasen folgendes umfassen:

   - die Aufbringung einer bekannten Zerdrückungskraft auf das Produkt, mit Hilfe einer Vorrichtung, die mit Backen versehen ist, eine Maßnahme zur Aufbringung einer Kraft auf diese Backen und ein Aufzeichnungssystem der relativen Verschiebung der besagten Backen,

   - Eine Datenerfassungsphase, in welcher man die Zeitverschiebung aufzeichnet,

   - Eine physikalische Charakterisierungsphase durch Anpassung des Modells an die experimentellen Daten, mit Hilfe von einem Multiregressionsinstrument,

   - Eine Produktbeschreibungsphase anhand von mindestens drei charakteristischen Parametern der plastischen und elastischen Verformung und des Relaxationsphänomens.

4. Verfahren gemäß den vorangehenden Patentansprüchen, **dadurch gekennzeichnet, dass** das besagte Modell, im Fall der Anwendung einer Kraft-Amplituden-Stufe F, folgender Formel entspricht:

$$d(t) = \frac{F \cdot p_2^2 \cdot p_3}{(p_1 + p_2)^2} x \left[ 1 - e^{\frac{p1+p2}{p1.p2.p3}xt} \right] + \frac{F}{p1+p2} xt$$

   mit:

   $p_1$:   typischer Parameter der Verlustleistung bei der Verformung
   $P_2$:   typischer Parameter der Kräfteentspannung
   $p_3$:   typischer Parameter der Energiespeicherung bei der Verformung
   F:   maximaler Wert der aufgebrachten Kraft F(t)

5. Verfahren nach Anspruch 3, **dadurch gekennzeichnet, dass** die Anpassung des besagten Modells an die experimentellen Daten mit Hilfe von einem nicht linearen EDV-Multiregressions-Instrument verwirklicht wird, und zwar auf Basis von einem Multiregressions-Algorhythmus wie jener von Newton Raphson, der größten Steilheit, oder jener von Levenberg-Marquardt, wodurch es möglich wird, die Unbestimmtheit auf den drei Parametern $p_1$, $p_2$, $p_3$ des Modells auszudrücken.

**Claims**

1. Method for characterising the compactness of objects, such as cigarettes or filters, as well the capacity to fill a volume by a product, such as tobacco, **characterised in that** it comprises the following stages :

   • the physical modelisation of phenomena involved in the process for crushing the object or product, this modelisation taking into account elastic deformation, plastic deformation and relaxation.
   • the adjustment of the model obtained during the modelisation stage with experimental data, and
   • the characterisation of the object or product from the adjusted model by means of parameters other than the crushing amplitude value and relating to the dissipation of energy during deformation, the relaxing of forces or even the accumulation of energy during deformation.

2. Method according to claim 2, **characterised in that** the model used is that of an electric circuit mounted between two terminals to which a voltage u(t) is applied and comprising in series firstly a resistor R1, and secondly a capacitor on which a resistor R2 is mounted in parallel.

3. Method according to one of the preceding claims, **characterised in that** said adjustment and characterisation states comprise:

   • the application to the product of a known crushing force using a device including jaws, a device for applying a force to these jaws and a system for recording a relative movement of said jaws,
   • a data acquisition stage in which the movement is recorded over a period of time,
   • a physical characterisation stage via the adjustment of the model using experimental data with the aid of a multiregression tool,
   • a stage for describing the product with the aid of at least three parameters characteristic of plastic deformation, elastic deformation and the relaxation phenomenon.

4. Method according to the preceding claims, **characterised in that**, in the case of applying a force step of amplitude F, said model is as specified below :

$$d(t) = \frac{F \cdot p_2^2 \cdot p_3}{(p1 + p2)^2} \; x \left( 1 - e^{\frac{p_1 + p_2}{p_1 \cdot p_2 \cdot p_3} \times t} \right) + \frac{F}{p_1 + p_2} \times t$$

With

$p_1$ :   parameter characteristic of the dissipation during deformation
$p_2$ :   parameter characteristic of the relaxing of forces
$p_3$ :   parameter characteristic of the accumulation of energy during deformation
$d(t)$ :   time-dependent movement
$F$ :   maximum value of the force applied F(t)

5. Method according to claim 3, **characterised in that** the adjustment of said model with the experimental data is embodied with the aid of a non-linear multiregression computer tool based on a multiregression algorithm, such as the Newton Raphson algorithm with a larger slope or the Levenberg-Marquardt algorithm making it possible to express the uncertainty concerning the three parameters $p_1$, $p_2$ and $p_3$ of the model.

FIG.1

FIG.2

- Echelon de force
- Application progressive de la force

FIG.3

- ◆ Expérience
- — Modèle